# EUROPEAN PATENT APPLICATION

(11) **EP 4 685 661 A1**
(43) Date of publication of application: **28.01.2026**
(21) Application number: 24777857.4
(22) Date of filing: 21.03.2024
(51) Int. Cl.: G06F 16/2458

(54) **DEVICE-CLOUD COLLABORATIVE DATA MINING METHOD, DEVICE, AND SYSTEM, AND COMPUTER CLUSTER**

(30) Priority: 31.03.2023 CN 202310379187
(71) Applicant: Huawei Technologies Co., Ltd., Shenzhen, Guangdong 518129 (CN)
(72) Inventor: PENG, Youcou, Shenzhen, Guangdong 518129 (CN); YUAN, Peng, Shenzhen, Guangdong 518129 (CN); HAN, Zhiqiang, Shenzhen, Guangdong 518129 (CN); WANG, Yuze, Shenzhen, Guangdong 518129 (CN); FENG, Bailan, Shenzhen, Guangdong 518129 (CN)
(74) Representative: Gill Jennings & Every LLP
(86) International application number: PCT/CN2024/082939
(87) International publication number: WO 2024/199068

(57) **Abstract**

A device-cloud collaborative data mining method includes: A cloud determines a target text and a task configuration file based on a service requirement; encodes the target text by using a text encoder to obtain a text feature; and places the text feature in the task configuration file and delivers the task configuration file to a vehicle. The vehicle encodes image data by using a first picture encoder to obtain an image feature; calculates a value of a similarity between the text feature and the image feature; determines a target picture based on the value of the similarity and the task configuration file; and uploads the target picture to the cloud. The first picture encoder is obtained by compressing and tuning a second picture encoder, and the text encoder and the second picture encoder are two modules of a large image-text multimodal model. This application is applied to an autonomous driving shadow mode, and data mining of any target text of interest can be completed by using a large model, without designing and developing a detection rule for each type of target of interest. In this way, a picture encoder on the vehicle may be continuously updated and optimized, to improve model iteration efficiency.

## Description

This application claims priority to Chinese Patent Application No. 202310379187.X, filed on March 31, 2023 and entitled "DEVICE-CLOUD COLLABORATIVE DATA MINING METHOD, APPARATUS, AND SYSTEM, AND COMPUTER CLUSTER", which is incorporated herein by reference in its entirety.

### TECHNICAL FIELD

This application relates to the field of intelligent driving, and in particular, to a device-cloud collaborative data mining method, apparatus, and system, and a computer cluster.

### BACKGROUND

With development of autonomous driving technologies, a gap between a sensing solution and a monitoring technology solution of autonomous driving is narrowing, and mass production and rollout of vehicles carrying an autonomous driving algorithm are accelerated. How to efficiently select required effective data from a large amount of data of mass-produced vehicles and drive automatic iteration of the autonomous driving algorithm is the key to continuous optimization of the autonomous driving algorithm. For vehicle data mining, a current manner is to design and develop a task model or a rule based on an autonomous driving requirement, release the task model, and then deliver the task model to a vehicle for data mining of a corresponding task. For the task model developed in this manner, a large amount of training data needs to be collected and targeted training and tuning need to be performed. Before the task model is tested, the large amount of training data is usually annotated in an automatic annotation or manual annotation manner. Testing the task model requires huge labor resources, material resources, and financial resources. In addition, the rule and the task model designed in this manner can only satisfy the specific requirement, and are not extensible.

### SUMMARY

To resolve the foregoing problem, embodiments of this application provide a device-cloud collaborative data mining method and system, and a computer cluster.

According to a first aspect, an embodiment of this application provides a device-cloud collaborative data mining method. The method includes: A cloud determines a target text and a task configuration file based on a service requirement; encodes the target text by using a text encoder to obtain a text feature; and places the text feature in the task configuration file and delivers the task configuration file to a vehicle. The vehicle encodes image data by using a first picture encoder to obtain an image feature; calculates a value of a similarity between the text feature and the image feature; determines a target picture based on the value of the similarity and the task configuration file; and uploads the target picture to the cloud. The first picture encoder is obtained by compressing and tuning a second picture encoder, and the text encoder and the second picture encoder are two modules of a large image-text multimodal model.

Therefore, based on strong generalization performance of the large image-text multimodal model, text and picture branches of the large image-text multimodal model are respectively deployed on the cloud and the vehicle. The cloud encodes the target text to obtain the text feature, and the vehicle encodes any image data to obtain an image feature, to implement device-cloud collaborative mining of the target picture. A requirement of running a large multi-modal model on a device with limited resources can be satisfied by using the first picture encoder that is simplified through compression and tuning.

In a possible implementation, the method further includes a step of compressing the large image-text multimodal model: The cloud performs large model compression by extracting supervision information of the second picture encoder, to obtain the first picture encoder.

Therefore, the cloud compresses the large image-text multimodal model with a complex structure to obtain a small picture encoder model with a similar effect and a simple structure, so that complexity of a network model is reduced, and the requirement of running the large multi-modal model on the device with limited resources is satisfied. The compressed small picture encoder model has the same performance as a large picture encoder model.

In a possible implementation, the large model compression includes distillation, quantization, and/or operator tuning.

Therefore, the large model compression may be further implemented through the foregoing distillation, quantization, and/or operator tuning, to simplify the network model.

In a possible implementation, the method further includes a step of fine-tuning a parameter of the large image-text multimodal model: inputting an annotated sample into the large image-text multimodal model for training, and obtaining a fine-tuning parameter when an image-text alignment loss between the second picture encoder and the text encoder converges, where the fine-tuning parameter includes a visual fine-tuning parameter and/or a text fine-tuning parameter.

Therefore, a small quantity of samples and a small quantity of parameters may be used for fine-tuning training to improve precision of the large image-text multimodal model, to reduce labor, material, and financial costs of model training. A small quantity of fine-tuning parameters may be trained based on different requirements, to improve mining precision.

In a possible implementation, the cloud updates the text encoder based on the text fine-tuning parameter to generate a new text feature.

Therefore, precision of the text encoder can be improved by adding only a small quantity of text parameters without changing the text encoder.

In a possible implementation, the task configuration file includes the visual fine-tuning parameter, and the vehicle updates the first picture encoder based on the visual fine-tuning parameter.

Therefore, precision of a picture encoder can be improved by adding only a small quantity of visual fine-tuning parameters without changing the picture encoder.

In a possible implementation, the task configuration file includes an algorithm name, and the vehicle starts the corresponding first picture encoder based on the algorithm name.

Therefore, corresponding mining algorithms may be started for different tasks, so that scalability is implemented.

In a possible implementation, the task configuration file includes a similarity threshold, and determining the target picture based on the value of the similarity and the task configuration file includes: when the value of the similarity between the text feature and the image feature is greater than the similarity threshold, determining the corresponding image data as the target picture.

In this way, the vehicle can efficiently select the required target picture from a large amount of data based on a task delivered by the cloud, to implement device-cloud collaborative data mining.

In a possible implementation, that the cloud determines the target text and the task configuration file based on the service requirement includes: The cloud updates the task configuration file based on the service requirement, where the task configuration file includes an updated similarity threshold.

Therefore, corresponding similarity thresholds may be set for different tasks, to drive automatic iteration of an algorithm, continuously optimize the algorithm, improve generalization performance of the large model, and implement scalability.

According to a second aspect, an embodiment of this application provides a device-cloud collaborative data mining apparatus. The apparatus includes: a requirement processing module, disposed on a cloud, where the requirement processing module determines a target text and a task configuration file based on a service requirement, encodes the target text by using a text encoder to obtain a text feature, and places the text feature in the task configuration file and delivers the task configuration file to a vehicle; and an image-text processing module, disposed on the vehicle, where the image-text processing module encodes image data by using a first picture encoder to obtain an image feature, calculates a value of a similarity between the text feature and the image feature, determines a target picture based on the value of the similarity and the task configuration file, and uploads the target picture to the cloud, where the first picture encoder is obtained by compressing and tuning a second picture encoder, and the text encoder and the second picture encoder are two modules of a large image-text multimodal model.

In a possible implementation, the device-cloud collaborative data mining apparatus further includes: a compression module, disposed on the cloud, where the compression training module is configured to perform large model compression by extracting supervision information of a large picture encoder model, to obtain the first picture encoder; a parameter updating module, configured to: input an annotated sample into the large image-text multimodal model for prompt tuning (Prompt tuning) training, and obtain a fine-tuning parameter when an image-text alignment loss between the second picture encoder and the text encoder converges, where the fine-tuning parameter includes a visual fine-tuning parameter and/or a text fine-tuning parameter; and a model updating module, where the cloud updates the text encoder based on the text fine-tuning parameter to generate a new text feature, and the vehicle updates the first picture encoder based on the visual fine-tuning parameter to generate a new picture feature.

According to a third aspect, an embodiment of this application provides a device-cloud collaborative data mining system. The system includes: a requirement processing apparatus, disposed on a cloud, where the requirement processing apparatus is configured to: determine a target text and a task configuration file based on a service requirement, encode the target text by using a text encoder to obtain a text feature, and place the text feature in the task configuration file and deliver the task configuration file to a vehicle; and an image-text processing apparatus, disposed on the vehicle, where the image-text processing apparatus is configured to: encode image data by using a first picture encoder to obtain an image feature, calculate a value of a similarity between the text feature and the image feature, determine a target picture based on the value of the similarity and the task configuration file, and upload the target picture to the cloud, where the first picture encoder is obtained by compressing and tuning a second picture encoder, and the text encoder and the second picture encoder are two modules of a large image-text multimodal model.

According to a fourth aspect, an embodiment of this application provides a computing device cluster, including at least one computing device, where each computing device includes a processor and a memory; and a processor of the at least one computing device is configured to execute instructions stored in a memory of the at least one computing device, to enable the computing device cluster to perform the method according to any one of the possible implementations of the first aspect.

According to a fifth aspect, an embodiment of this application provides a computer storage medium. The computer storage medium stores instructions. When the instructions are run on a computer, the computer is enabled to perform the method according to any one of the possible implementations of the first aspect.

According to a sixth aspect, an embodiment of this application provides a computer program product including instructions. When the instructions are run by a computing device cluster, the computing device cluster is enabled to perform the method according to any one of the possible implementations of the first aspect.

### BRIEF DESCRIPTION OF DRAWINGS

To describe technical solutions in a plurality of embodiments disclosed in the specification more clearly, the following briefly describes the accompanying drawings used in describing embodiments. It is clear that the accompanying drawings in the following descriptions show merely the plurality of embodiments disclosed in the specification, and persons of ordinary skill in the art can still derive other drawings from these accompanying drawings without creative efforts.

The following briefly describes the accompanying drawings used in describing embodiments or the conventional technology.
FIG. 1 is a diagram of a software architecture according to an embodiment of this application;
FIG. 2 is a diagram of a device-cloud collaborative data mining method according to an embodiment of this application;
FIG. 3 is a diagram of device-cloud collaborative update of a small picture encoder model;
FIG. 4 is a diagram of large model compression in a device-cloud collaborative data mining method according to Embodiment 1 of this application;
FIG. 5 is a flowchart of a device-cloud collaborative data mining method according to Embodiment 2 of this application;
FIG. 6 is a flowchart of a device-cloud collaborative data mining method according to Embodiment 3 of this application;
FIG. 7 is a diagram of a device-cloud collaborative data mining system according to an embodiment of this application;
FIG. 8 is a diagram of a device-cloud collaborative data mining apparatus according to an embodiment of this application;
FIG. 9 is a diagram of a computing device cluster according to an embodiment of this application; and
FIG. 10 is a diagram of a manner of connection between computing device clusters according to an embodiment of this application.

### DESCRIPTION OF EMBODIMENTS

To make objectives, technical solutions, and advantages of embodiments of this application clearer, the following describes the technical solutions in embodiments of this application with reference to accompanying drawings.

In descriptions of embodiments of this application, words such as "example" or "for example" are used to represent an example, an illustration, or a description. Any embodiment or design solution described as "example" or "for example" in embodiments of this application should not be interpreted as being more preferred or advantageous than another embodiment or design solution. Exactly, use of the words such as "example" or "for example" is intended to present related concepts in a specific manner.

In the descriptions of embodiments of this application, the term "and/or" describes only an association relationship between associated objects and represents that three relationships may exist. For example, A and/or B may indicate: only A exists, only B exists, and both A and B exist. In addition, unless otherwise specified, the term "a plurality of" means two or more. For example, a plurality of systems means two or more systems, and a plurality of terminals means two or more terminals.

In addition, terms "first" and "second" are merely intended for description, and shall not be understood as an indication or implication of relative importance or an implicit indication of an indicated technical feature. Therefore, a feature limited by "first" or "second" may explicitly or implicitly include one or more features. Terms "include", "contain", "have", and their variants all mean "include but are not limited to", unless otherwise specifically emphasized in another manner.

The descriptions of embodiments of this application relate to "some embodiments" that describe subsets of all possible embodiments, but it may be understood that "some embodiments" may be same or different subsets of all the possible embodiments and may be combined with each other without conflict.

In the descriptions of embodiments of this application, terms "first\second\third, and the like", or a module A, a module B, a module C, and the like are merely used to distinguish between similar objects, and do not represent a specific order of objects. It may be understood that specific orders or sequences may be interchanged when allowed, so that embodiments of this application described herein can be implemented in an order other than those shown or described herein.

In the descriptions of embodiments of this application, involved reference numerals such as S110 and S120 that indicate steps do not necessarily indicate that the steps are to be performed based on the order, and consecutive steps may be exchanged when allowed, or may be performed simultaneously.

Large model compression means to simplify a model based on redundancy of neural network parameters and redundancy of a network structure, so that the model can run on some devices with limited resources. There are two types of restrictions: limited memory space (Limited memory space) and limited computing power (Limited computing power). Model compression manners include network pruning (Network Pruning), knowledge distillation (Knowledge Distillation), parameter quantization (Parameter Quantization), architecture design (Architecture Design), dynamic computation (Dynamic Computation), and the like. Devices with limited resources are, for example, mobile phones, watches, aircrafts, smart glasses, and autonomous driving systems.

Distillation (Knowledge Distillation) means to compress a large model (teacher) with a complex structure to obtain a small model (student) with a similar effect and a simple structure, so that performance of the compressed small model is improved because complexity of a network model is reduced.

Quantization (Parameter Quantization) means to store a value by using fewer bits, for example, a parameter previously stored by using 32 bits is replaced with a parameter stored by using 16 bits. In this way, a network size is reduced by half.

A prompt technology means to insert a segment of learnable parameters into an input token, and then train the parameters to fine-tune a model. When a new task has only a small quantity of training samples, common fine-tuning usually causes overfitting due to an excessively large quantity of model parameters. The prompt technology can be used to fix model parameters and add a small quantity of parameters for training.

Unless otherwise defined, all technical and scientific terms used in this specification have same meanings as those usually understood by persons skilled in the art of this application. The terms used in this specification are merely intended to describe embodiments of this application, and are not intended to limit this application.

In a first solution, a target recognition algorithm is set for triggering of a target of interest, the target recognition algorithm is defined based on a type of the target of interest, and a corresponding seed trigger is set for each type of target of interest in the target recognition algorithm. The target recognition algorithm is deployed on a vehicle. A cloud triggers, based on a service requirement, a target recognition algorithm corresponding to the vehicle, and outputs a data result of the target of interest. After the data result of the target of interest is collected, the data result of the target of interest is annotated, and annotated data is input into a corresponding seed trigger for algorithm iterative training, to form closed-loop data for optimizing the target recognition algorithm. The type of the target of interest includes a target vehicle, a target non-motor vehicle, a pedestrian, a sign, an obstacle, a traffic signal, and the like.

In this solution, a target recognition algorithm needs to be designed and trained for each type of target of interest, and a large amount of training data needs to be collected for training the target recognition algorithm. The seed trigger deployed on the vehicle cannot be updated and iterated. Consequently, precision of mining the target of interest by the vehicle cannot be improved. Although the vehicle may upgrade the entire seed trigger by updating a model or updating an interface, and then perform data mining of the target of interest, an update and upgrade process is complex.

In an autonomous driving sensing system, a data mining function is the key to continuous capability improvement. In the autonomous driving sensing system, hardware includes a sensor, a processor, and the like, where the vehicle collects a large amount of data information, including video information and image information, by using the sensor, performs data mining and data processing by using the processor, and uploads mined target data to the cloud; and software includes an operating system, a sensor driver, and functional units.

A device-cloud collaborative data mining method provided in embodiments of this application is mainly applied to the autonomous driving sensing system. A model is trained on the cloud, some added parameters are delivered with a task to the vehicle, and the some added parameters are used for data mining of a new task. This can resolve problems that the precision of mining the target of interest by the vehicle cannot be improved, the large amount of training data needs to be collected, and the update and upgrade process is complex.

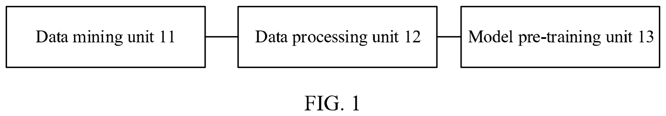

FIG. 1 is a diagram of a cloud software architecture according to an embodiment of this application. As shown in FIG. 1, the cloud software architecture includes: a data mining unit 11, configured to obtain target data from a large amount of data based on a service requirement; a data processing unit 12, configured to pre-annotate or manually annotate the target data; and a model pre-training unit 13, configured to: input annotated target data into a target model, and pre-train the target model, to continuously improve performance of the target model, where the target data includes a target text and a target picture.

The target model is a large image-text multimodal model, and is used to measure an image-text correlation between text data and image data in an image-text information retrieval scenario. The large image-text multimodal model has two modal branches: a picture modal and a text modal. A corresponding large text encoder model is set for the text modal, and a corresponding large picture encoder model is set for the picture modal.

A small picture encoder model is constructed by using a large model compression method. The small picture encoder model has the same performance as the large picture encoder model, and the small picture encoder model is configured on a vehicle. The small picture encoder model may be denoted as a first picture encoder, and the large picture encoder model may be denoted as a second picture encoder. The first picture encoder is a small model obtained by compressing and tuning the second picture encoder.

The large model compression method includes knowledge distillation (Knowledge Distillation), parameter quantization (Parameter Quantization), and the like.

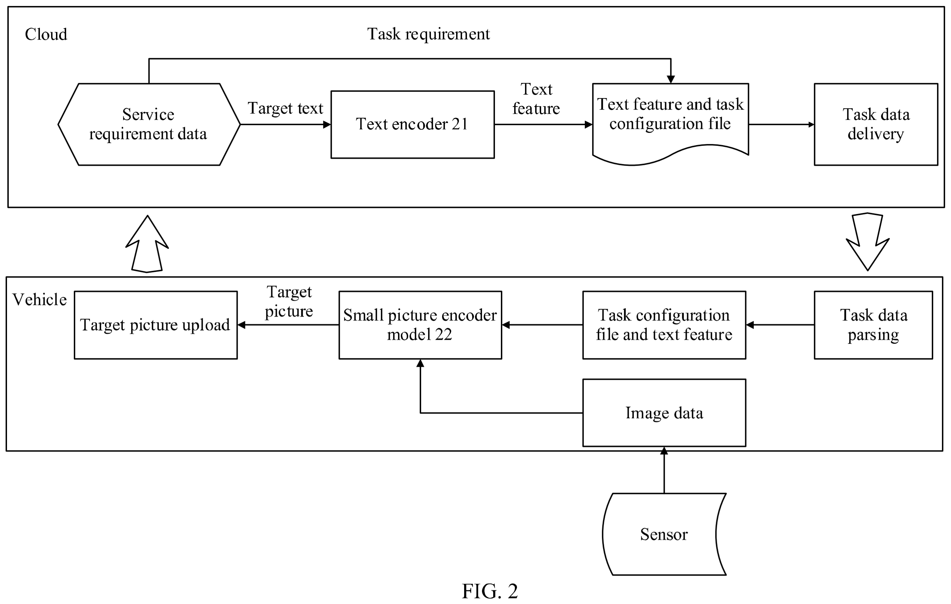

FIG. 2 is a diagram of a device-cloud collaborative data mining method according to an embodiment of this application. As shown in FIG. 2, a text encoder 21 is configured on a cloud processor (cloud for short), and a small picture encoder model on a vehicle is configured on a vehicle processor (vehicle for short). The method includes: The cloud determines a target text and a task configuration file based on a service requirement, encodes the target text by using the text encoder 21 to obtain a text feature, and delivers the text feature and the task configuration file to the vehicle. The vehicle encodes image data by using the small picture encoder model 22 to obtain an image feature, calculates a value of a similarity between the text feature and the image feature, determines a target picture based on the similarity and the task configuration file, and uploads the target picture to the cloud. The small picture encoder model is obtained by compressing and tuning a large picture encoder model, and the text encoder and the large picture encoder model are two modules of a large image-text multimodal model.

The following specifically describes the device-cloud collaborative data mining method according to this embodiment of this application. The device-cloud collaborative data mining method according to this embodiment of this application includes the following steps S21 to S27.

S21: The cloud determines the target text and the task configuration file based on the service requirement.

The service requirement is a service target of interest or a service scenario of interest, for example, a vehicle, a non-motor vehicle, a pedestrian, a sign, an obstacle, a traffic signal glare, or a rainy day.

For example, the service requirement is mining a sun glare picture, and the cloud determines, based on the service requirement, that the target text is "A photo of a sun glare".

The task configuration file is set based on the service requirement. The task configuration file includes task-related configurations, including a similarity threshold, a name of a to-be-started algorithm, and a fine-tuning parameter. The similarity threshold is used to ensure image-text alignment precision of data mining, and the similarity between the image feature of the target picture and the text feature of the target text needs to be greater than a specified similarity threshold. The algorithm name indicates an algorithm to be started by the vehicle. The fine-tuning parameter is used to update a parameter of the text encoder and/or a first picture encoder.

S22: Encode the target text by using the text encoder 21, to obtain the text feature.

The text encoder 21 is configured to encode a variable-length target text into a fixed-length feature vector, where the fixed-length feature vector is denoted as the text feature.

S23: Place the text feature in the task configuration file and deliver the task configuration file to the vehicle.

The task configuration file includes the similarity threshold. The cloud delivers the text feature obtained in step S22 and the similarity threshold to the vehicle.

In some possible implementations, the task configuration file further includes the name of the to-be-started algorithm, for example, the large picture encoder model or the small picture encoder model.

S24: The vehicle starts the small picture encoder model 22 on the vehicle based on task requirement information, where the small picture encoder model 22 is used to encode the image data received by a sensor into the image feature. The following steps are specifically included.

S241: The vehicle receives the task configuration file delivered by the cloud, parses the task configuration file to obtain the name of the to-be-started algorithm, the similarity threshold, and the text feature, and starts a vehicle mining algorithm based on the algorithm name.

The vehicle mining algorithm may be the small picture encoder model 22 in this application, or may be another picture or radar mining algorithm, for example, a heterogeneous vehicle mining algorithm.

S242: The vehicle obtains the image data by using the sensor.

The sensor includes a vehicle-mounted camera, a radar, or the like. The vehicle collects image data information by using the vehicle-mounted camera, to obtain the image data.

S243: Encode the image data by using the small picture encoder model 22 to obtain the corresponding image feature.

The small picture encoder model 22 is configured to encode any image data into a fixed-length feature vector. The feature vector corresponding to the image data may be denoted as the image feature.

The image data obtained in step 242 is input into the small picture encoder model 22 for encoding, and the corresponding image feature is output. The image feature is Y=(y1, y2, y3, ..., yn), and a length of the image feature and a length of the text feature are the same, and both are n.

S25: Calculate the similarity between the image feature and the text feature to obtain the value of the similarity.

The similarity refers to a similarity between two objects. The similarity is obtained by calculating a distance between feature vectors of two objects. A small distance between the features of the two objects indicates a high similarity, and a large distance between the features of the two objects indicates a low similarity.

For a text feature X=(x1, x2, x3, ..., xn) and the image feature Y=(y1, y2, y3, ..., yn), a cosine similarity, namely, a cosine value of an angle between two vectors, may be used for similarity evaluation.

S26: Determine the target picture based on the similarity and the similarity threshold.

The value of the similarity is compared with the similarity threshold. If the value of the similarity is greater than or equal to the similarity threshold, the image is determined as the target picture. If the value of the similarity is less than the similarity threshold, the image is discarded.

For example, the similarity threshold obtained by the vehicle by parsing the task configuration file is 0.8, the value of the similarity between the image feature X=(x1, x2, x3, ..., xn) and the text feature Y=(y1, y2, y3, ..., yn) obtained through calculation by using a cosine similarity method is 0.86, and the similarity is greater than the similarity threshold. In this case, the image data corresponding to the image feature is the target picture.

S27: Upload the target picture to the cloud.

To improve accuracy of data mining, the cloud efficiently fine-tunes a parameter by using a prompt tuning (Prompt tuning) method, and delivers an added parameter with a task to the vehicle, for data mining of a new task.

The prompt tuning method is used to improve model precision by using a small quantity of samples and fine-tuning a small quantity of parameters. The prompt tuning method is used to efficiently fine-tune a parameter, so that a small quantity of parameters can be added to improve model precision without changing the text encoder and an image encoder.

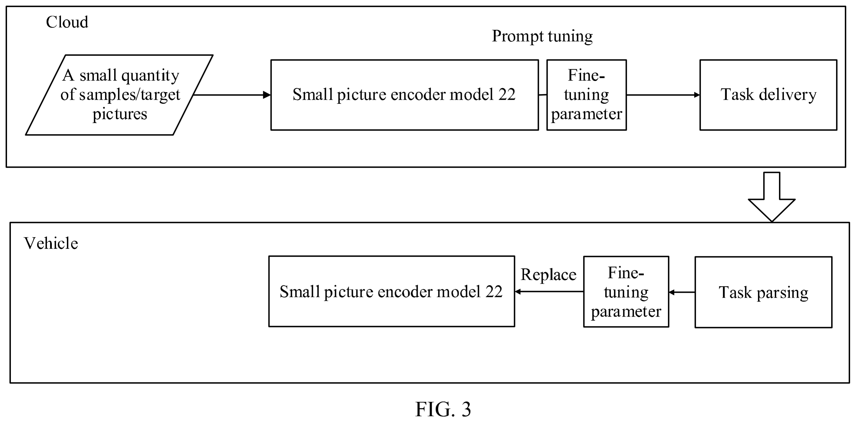

FIG. 3 is a diagram of device-cloud collaborative update of a small picture encoder model. As shown in FIG. 3, a cloud trains a text encoder and a second image encoder through prompt tuning by using a small quantity of samples or a mined target picture, to obtain a text fine-tuning parameter and/or a visual fine-tuning parameter. The visual fine-tuning parameter is added to a task configuration file, and is delivered to a vehicle. The vehicle adds the visual fine-tuning parameter to a small picture encoder model 22, and the cloud may also add the text fine-tuning parameter to the text encoder to generate a new text feature.

Model optimization and updating in the device-cloud collaborative data mining method according to this embodiment of this application includes the following steps S31 to S36.

S31: The cloud trains and optimizes the text encoder and the second image encoder through prompt tuning (Prompt tuning), to obtain the text fine-tuning parameter and the visual fine-tuning parameter.

Training data may be target pictures packaged and uploaded by the vehicle, or may be a small quantity of annotated training sample pictures in a database.

S32: Place the visual fine-tuning parameter in the task configuration file and deliver the task configuration file to the vehicle. In some possible implementations, the task configuration file further includes a new similarity threshold.

S33: The vehicle receives the task configuration file, and parses the task configuration file to obtain the visual fine-tuning parameter and/or the new similarity threshold.

S34: Add the visual fine-tuning parameter to the small picture encoder model 22, and update the small picture encoder model 22 to obtain an optimized small picture encoder model 22.

When new image data received by a sensor is encoded by using the optimized small picture encoder model 22, a corresponding image feature is obtained, a similarity between the image feature and a text feature encoded by a cloud model is calculated, and target picture data of interest is mined based on whether the similarity is greater than the new similarity threshold.

### Embodiment 1

In a device-cloud collaborative data mining method according to Embodiment 1 of this application, a cloud performs compression and tuning training on a large image-text multimodal model with a complex structure to obtain a small picture encoder model 22 with a similar effect and a simple structure, so that complexity of a network model is reduced. Then, a text encoder 21 is deployed on the cloud, and the small picture encoder model 22 is deployed on a vehicle, to perform device-cloud collaborative data mining training.

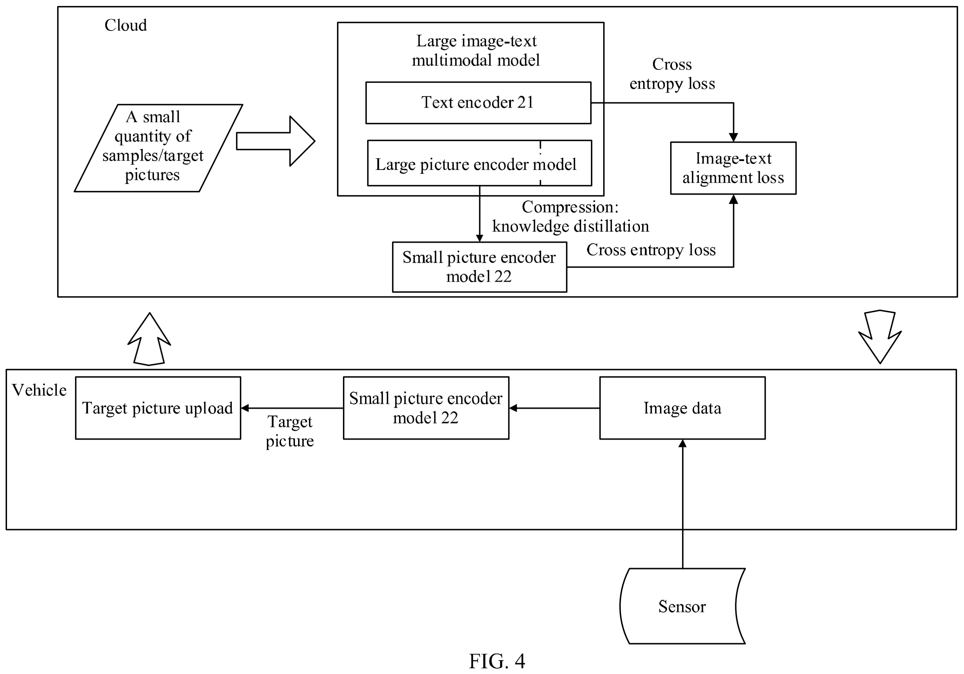

FIG. 4 is a diagram of large model compression in the device-cloud collaborative data mining method according to Embodiment 1 of this application. As shown in FIG. 4, the large model compression includes the following steps S41 and S42.

S41: Compress and optimize a large picture encoder model in the large image-text multimodal model, to obtain the small picture encoder model 22.

A knowledge distillation (Knowledge Distillation) method may be used to extract supervision information of the large picture encoder model in the large image-text multimodal model, to construct the small picture encoder model 22. The small picture encoder model 22 has the same performance as the large picture encoder model.

S42: Separately input a small quantity of annotated samples into the large image-text multimodal model for fine-tuning, separately calculate a cross entropy loss based on a similarity between a text feature output by the text encoder 21 and an image feature output by the small picture encoder model 22 and an annotated category, and obtain a fine-tuned text encoder 21 and a fine-tuned small picture encoder model 22 when the cross entropy loss converges.

In some possible implementations, the small picture encoder model 22 may be fine-tuned and optimized by using a parameter quantization (Parameter Quantization) method.

Steps of performing device-cloud collaborative data mining based on the small picture encoder model 22 obtained after compression are the following steps S43 to S46.

S43: Determine a mined target text and a used mining algorithm based on a service requirement.

S44: Separately deploy the fine-tuned text encoder 21 and the fine-tuned small picture encoder model 22, where the text encoder 21 is deployed on the cloud, and the small picture encoder model 22 is deployed on the vehicle.

S45: The cloud sets a similarity threshold based on the service requirement, and writes a mining algorithm name and the similarity threshold into a task configuration file.

For example, the service requirement may be mining a sun glare, a corresponding similarity threshold is set to 0.80, and the algorithm name "general text retrieval" and the similarity threshold 0.80 are written into the task configuration file.

S46: Perform device-cloud collaborative data mining based on a new service requirement. For a specific implementation, refer to steps S21 to S27. Details are not described herein again.

### Embodiment 2

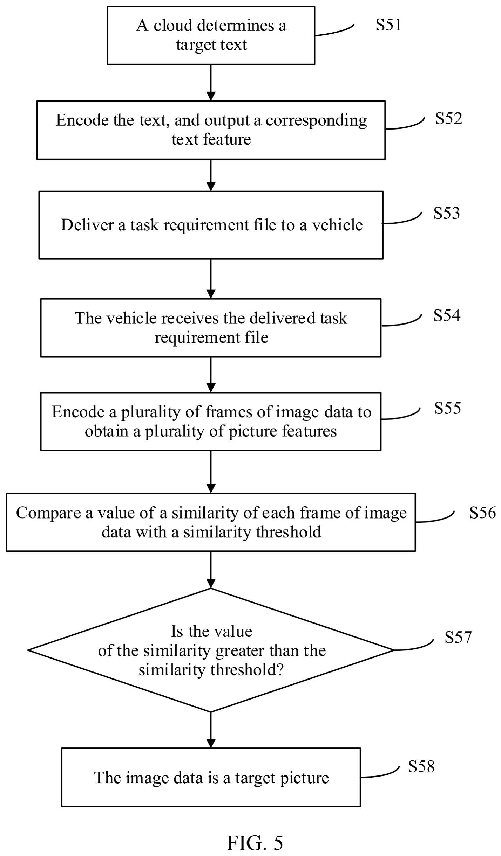

FIG. 5 is a flowchart of a device-cloud collaborative data mining method according to Embodiment 2 of this application. As shown in FIG. 5, based on Embodiment 1, the text encoder 21 and the small picture encoder model 22 of the large image-text multimodal model are separately deployed. The text encoder 21 is deployed on the cloud, the small picture encoder model 22 is deployed on the vehicle, and the small picture encoder model 22 is obtained by compressing the large picture encoder model. The device-cloud collaborative data mining method includes the following steps.

S51: Determine a service requirement, and determine a target text based on the service requirement.

The service requirement may be a target of mining.

For example, the cloud determines, based on a current autonomous driving model corner case scenario, that a target of interest is a garbage bag on a road. In this case, the target text is "a photo of garbage bag on the road".

S52: Input the target text determined in step S51 into the text encoder 21, where the text encoder 21 outputs a corresponding text feature.

The text encoder 21 is a text module of the large image-text multimodal model.

For example, the cloud inputs the target text "a photo of garbage bag on the road" into the text encoder 21, to generate a 512-bit text vector X=(x1, x2, x3, ..., xn), where x1, x2, x3, ..., and xn are natural numbers.

S53: The cloud delivers a task configuration file to the vehicle. The task configuration file includes the text feature, a name of a to-be-started algorithm, and a similarity threshold.

For example, the cloud determines, based on a service requirement of a garbage bag on a mining road, that the name of the to-be-started algorithm is "general text retrieval", and a value of a similarity between a target picture and the target text needs to be greater than a specified similarity threshold 0.80. In this case, the cloud delivers the 512-bit text vector X=(x1, x2, x3, ..., xn), the algorithm name "general text retrieval", and 0.80 to the vehicle.

S54: The vehicle receives the delivered task configuration file, and parses the task configuration file to obtain the text feature, the name of the to-be-started algorithm, and the similarity threshold.

For example, the name of the to-be-started algorithm is "general text retrieval", the similarity threshold is 0.80, and the text vector X=(x1, x2, x3, ..., xn).

S55: The vehicle may obtain frame-by-frame picture data by using a sensor, and then input the frame-by-frame picture data into the small picture encoder model 22 for encoding, to obtain a fixed-length feature vector corresponding to each frame of image data.

For example, the vehicle inputs, frame by frame, the image data collected by the sensor into a picture encoder named "general text retrieval" for encoding, to obtain an image feature corresponding to each frame of image data. The image feature of each frame is a fixed-length feature vector, and a length is n.

S56: Calculate a similarity between the image feature of each frame and the text feature X to obtain a value of the similarity between the image feature of each frame and the text feature.

For example, similarities between image features Y1, Y2, ..., and Y100 corresponding to all frames of image data and the text feature X are separately calculated, to obtain the value of the similarity between the image feature of each frame and the text feature.

S57: Compare values of the similarities of all frames of image data with the similarity threshold, and obtain a plurality of target pictures when the value of the similarity is greater than the similarity threshold.

For example, the values of the similarities of all frames of image data are 0.71, 0.74, 0.61, 0.88, ..., and 0.87, and the similarity threshold is 0.80. The values of the similarities of all frames of image data are compared with the similarity threshold. Image data whose similarity value is greater than 0.80 is a target picture, and there are a plurality of target pictures.

S58: Package a plurality of target pictures whose similarities are greater than the similarity threshold in a time period and upload the target pictures to the cloud.

In the device-cloud collaborative data mining method according to Embodiment 2 of this application, based on the large image-text multimodal model, a text branch and a picture branch of the large image-text multimodal model are respectively deployed on the cloud and the vehicle based on strong generalization performance of the large image-text multimodal model. The cloud encodes the target text to obtain the text feature, and the vehicle encodes any image data to obtain the image feature. The target picture is mined based on the text feature, the image feature, and the similarity threshold.

### Embodiment 3

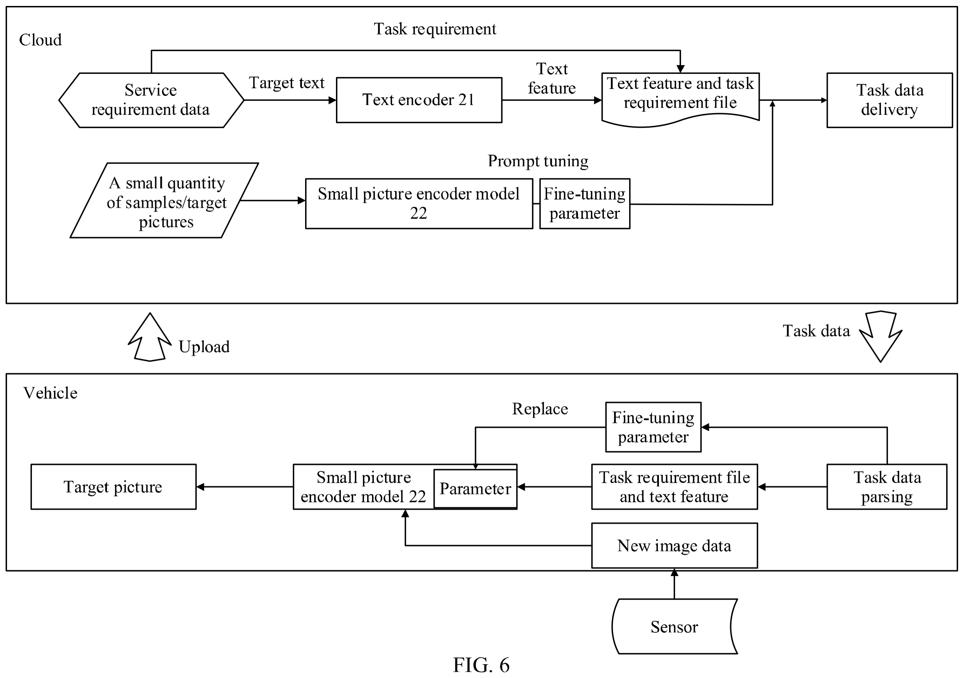

FIG. 6 is a flowchart of a device-cloud collaborative data mining method according to Embodiment 3 of this application. As shown in FIG. 6, in the device-cloud collaborative data mining method according to Embodiment 3 of this application, a new task-specific parameter is accurately and effectively adjusted on a cloud by combining a model compression technology and a prompt technology and by using a mined target picture, to improve precision of mining the target picture; and the new task-specific parameter is pushed to a vehicle to adapt to a new mining task.

S61: The cloud efficiently fine-tunes a parameter by using a prompt tuning (Prompt tuning) method, and adds one or more text fine-tuning parameters and/or one or more picture fine-tuning parameters without changing a large text encoder model and a small picture encoder model.

The cloud efficiently fine-tunes a pre-trained model by using the prompt tuning (Prompt tuning) method and the mined target picture, and obtains a fine-tuning parameter that satisfies a specific task requirement.

For example, the mined target picture may be a picture of "large garbage bag filled with garbage on a roadside", and poorly matches a target text "a photo of garbage bag on the road". To improve a matching degree or adapt to the new mining task, the cloud efficiently fine-tunes an image-text multimodal model by using the prompt tuning method, and obtains one or more related text fine-tuning parameters and picture fine-tuning parameters that better match the target picture.

S62: Generate a new text feature based on the one or more text fine-tuning parameters, and add the new text feature to a task configuration file.

S63: Add the one or more picture fine-tuning parameters to the task configuration file, and deliver the task configuration file to the vehicle. The task configuration file to which the one or more picture fine-tuning parameters and/or the new text feature are added may be denoted as a second task configuration file.

After a new fine-tuning parameter is introduced, classification precision can be readjusted. In some possible implementations, a new similarity threshold may be set based on the specific task requirement, and the new similarity threshold, an algorithm name, and one or more visual fine-tuning parameters are added to the second task configuration file.

S64: The vehicle receives a new task configuration file, and parses the new task configuration file to obtain the visual fine-tuning parameter and/or the new similarity threshold.

S65: Replace the visual fine-tuning parameter or add the visual fine-tuning parameter to a small picture encoder model 22, to obtain an optimized small picture encoder model 22.

S66: Encode, by using the optimized small picture encoder model 22, new image data received by a sensor, to obtain a second image feature.

S67: Calculate a similarity between the second image feature and the new text feature, and determine new target picture data based on whether the similarity is greater than the new similarity threshold, where precision of the new target picture data is improved.

In a new round of data mining task, the cloud may indicate, based on a service requirement, an algorithm name of a small picture encoder model that needs to be started by the vehicle. Alternatively, the cloud efficiently fine-tunes the parameter by using the prompt tuning (Prompt tuning) method, adds one or more fine-tuning parameters without changing architectures of the large text encoder model and a large picture encoder model, and delivers the one or more fine-tuning parameters with a task configuration file to the vehicle for current target data mining.

The device-cloud collaborative data mining method according to this embodiment of this application is applied to an autonomous driving shadow mode, and can complete data mining of any target text of interest by using a large model, without designing and developing a detection rule for each type of target of interest.

According to the device-cloud collaborative data mining method in this embodiment of this application, a picture encoder on the vehicle may be continuously updated and optimized, to improve model iteration efficiency.

This embodiment of this application needs to be implemented by using software and hardware systems of an autonomous vehicle. The hardware system includes a sensor, a processor, and the like in a sensing system. The software system includes an operating system, a sensor driver, a processing program of each system, and the like.

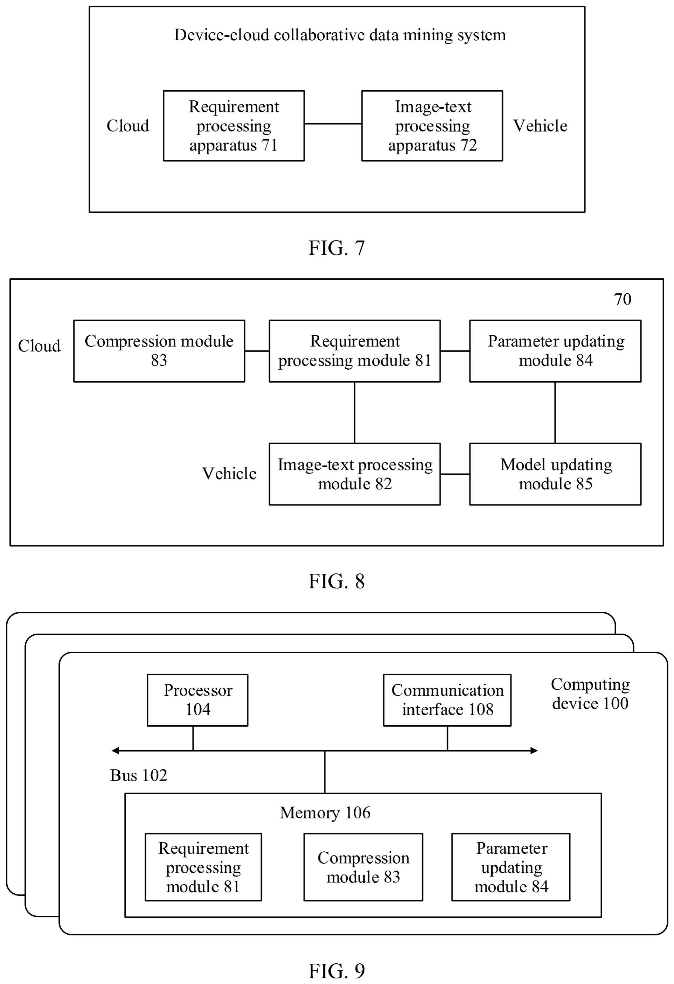

FIG. 7 is a diagram of a device-cloud collaborative data mining system according to an embodiment of this application. As shown in FIG. 7, the system includes: a requirement processing apparatus 71, disposed on a cloud, where the requirement processing apparatus 71 determines a target text and a task configuration file based on a service requirement, encodes the target text by using a text encoder to obtain a text feature, and places the text feature in the task configuration file and delivers the task configuration file to a vehicle; and an image-text processing apparatus 72, disposed on the vehicle, where the image-text processing apparatus 72 encodes image data by using a first picture encoder to obtain an image feature, calculates a value of a similarity between the text feature and the image feature, determines a target picture based on the value of the similarity and the task configuration file, and uploads the target picture to the cloud.

Both the requirement processing apparatus 71 and the image-text processing apparatus 72 may be implemented by using software, or may be implemented by using hardware. For example, the following describes an implementation of the requirement processing apparatus 71. Similarly, for an implementation of the image-text processing apparatus 72, refer to the implementation of the requirement processing apparatus 71.

As an example of a software functional unit, the requirement processing apparatus 71 may include code running on a computing instance. The computing instance may be at least one of computing devices such as a physical host (computing device), a virtual machine, and a container. Further, there may be one or more computing devices. For example, the requirement processing apparatus 71 may include code running on a plurality of hosts/virtual machines/containers. It should be noted that the plurality of hosts/virtual machines/containers used to run the application may be distributed in a same region, or may be distributed in different regions. The plurality of hosts/virtual machines/containers used to run the code may be distributed in a same AZ, or may be distributed in different AZs. Each AZ includes one data center or a plurality of data centers that are geographically close to each other. Usually, one region may include a plurality of AZs.

Similarly, the plurality of hosts/virtual machines/containers used to run the code may be distributed in a same VPC, or may be distributed in a plurality of VPCs. Usually, one VPC is set in one region. A communication gateway needs to be set in each VPC for communication between two VPCs in a same region or between VPCs in different regions. Interconnection between VPCs is implemented through the communication gateway.

A module is used as an example of a hardware functional unit, and the requirement processing apparatus 71 may include at least one computing device, for example, a server. Alternatively, the requirement processing apparatus 71 may be a device implemented by using an ASIC, a PLD, or the like. The PLD may be implemented by a CPLD, an FPGA, GAL, or any combination thereof.

The plurality of computing devices included in the requirement processing apparatus 71 may be distributed in a same region, or may be distributed in different regions. The plurality of computing devices included in the requirement processing apparatus 71 may be distributed in a same AZ, or may be distributed in different AZs. Similarly, the plurality of computing devices included in the requirement processing apparatus 71 may be distributed in a same VPC, or may be distributed in a plurality of VPCs. The plurality of computing devices may be any combination of computing devices such as a server, an ASIC, a PLD, a CPLD, an FPGA, and GAL.

FIG. 8 is a diagram of a device-cloud collaborative data mining apparatus according to an embodiment of this application. As shown in FIG. 8, the apparatus includes:
a requirement processing module 81, disposed on a cloud, where the requirement processing module 81 determines a target text and a task configuration file based on a service requirement, encodes the target text by using a text encoder to obtain a text feature, and places the text feature in the task configuration file and delivers the task configuration file to a vehicle; and
an image-text processing module 82, disposed on the vehicle, where the image-text processing module 82 encodes image data by using a first picture encoder to obtain an image feature, calculates a value of a similarity between the text feature and the image feature, determines a target picture based on the value of the similarity and the task configuration file, and uploads the target picture to the cloud.

The device-cloud collaborative data mining apparatus in this application further includes: a compression module 83, disposed on the cloud, where the compression training module is configured to perform large model compression by extracting supervision information of a large picture encoder model, to obtain the first picture encoder;
a parameter updating module 84, configured to: input an annotated sample into a large image-text multimodal model for prompt tuning (Prompt tuning) training, and obtain a fine-tuning parameter when an image-text alignment loss between a second picture encoder and the text encoder converges, where the fine-tuning parameter includes a visual fine-tuning parameter and/or a text fine-tuning parameter; and
a model updating module 85, where the cloud updates the text encoder based on the text fine-tuning parameter to generate a new text feature, and the vehicle updates the first picture encoder based on the visual fine-tuning parameter to generate a new picture feature.

The requirement processing module 81, the image-text processing module 82, the compression module 83, the parameter updating module 84, and the model updating module 85 may all be implemented by using software, or may all be implemented by using hardware.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 9, the computing device cluster includes at least one computing device 100. The computing device 100 includes a bus 102, a processor 104, a memory 106, and a communication interface 108. The processor 104, the memory 106, and the communication interface 108 communicate with each other through the bus 102. The computing device 100 may be a server or a terminal device. It should be understood that quantities of processors and memories in the computing device 100 are not limited in this application.

The bus 102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 9, but this does not mean that there is only one bus or only one type of bus. The bus 102 may include a path for transmitting information between components (for example, the memory 106, the processor 104, and the communication interface 108) of the computing device 100.

The processor 104 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 106 may include a volatile memory (volatile memory), for example, a random access memory (random access memory, RAM). The memory 106 may further include a nonvolatile memory (nonvolatile memory), for example, a read-only memory (read-only memory, ROM), a flash memory, a hard disk drive (hard disk drive, HDD), or a solid state drive (solid state drive, SSD).

The memory 106 stores executable program code, and the processor 104 executes the executable program code to separately implement functions of the processing module 81, the compression module 83, and/or the parameter updating module 84, so as to implement the device-cloud collaborative data mining method.

Alternatively, the memory 106 stores executable code, and the processor 104 executes the executable code to separately implement functions of the image-text processing module 82 and the model updating module 85, so as to implement the device-cloud collaborative data mining method.

The communication interface 103 uses a transceiver module, for example, but not limited to, a network interface card or a transceiver, to implement communication between the computing device 100 and another device or a communication network.

The memory 106 in one or more computing devices 100 in the computing device cluster may store same instructions for performing the device-cloud collaborative data mining method.

In some possible implementations, the memory 106 in the one or more computing devices 100 in the computing device cluster may alternatively separately store a part of instructions for performing the device-cloud collaborative data mining method. In other words, a combination of the one or more computing devices 100 may jointly execute the instructions for performing the device-cloud collaborative data mining method.

It should be noted that memories 106 in different computing devices 100 in the computing device cluster may store different instructions, and are separately used to perform a part of functions of the requirement processing apparatus 71 or the image-text processing apparatus 72. In other words, the instructions stored in the memories 106 in the different computing devices 100 may implement functions of one or more of the requirement processing module 81, the compression module 83, the parameter updating module 84, or the image-text processing module 82 and the model updating module 85.

In some possible implementations, the one or more computing devices in the computing device cluster may be connected through a network. The network may be a wide area network, a local area network, or the like.

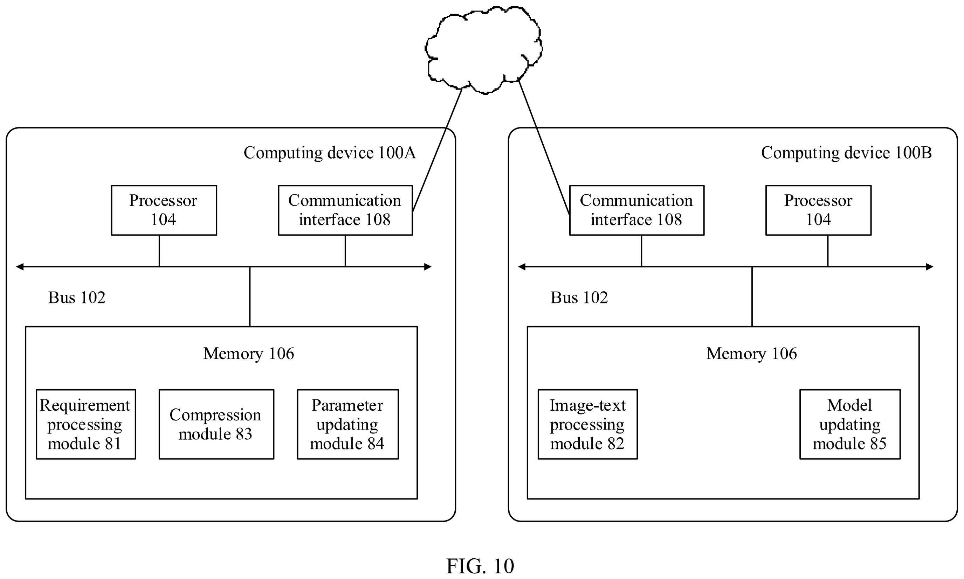

FIG. 10 shows a possible implementation. As shown in FIG. 10, two computing devices 100A and 100B are connected through a network. Specifically, each computing device is connected to the network through a communication interface of the computing device. In this type of possible implementation, the memory 106 in the computing device 100A stores instructions for performing a function of the requirement processing module 81. In addition, the memory 106 in the computing device 100B stores instructions for performing a function of the image-text processing module 82.

In a manner of connection between computing device clusters shown in FIG. 10, it may be considered that in the device-cloud collaborative data mining method provided in this application, a large amount of data needs to be stored and a model needs to be optimized and fine-tuned. Therefore, it is considered that functions implemented by the compression module 83 and the parameter updating module 84 are performed by the computing device 100A, and the model updating module 85 is performed by the computing device 100B.

It should be understood that the functions of the computing device 100A shown in FIG. 10 may alternatively be completed by a plurality of computing devices 100. Similarly, the function of the computing device 100B may also be completed by a plurality of computing devices 100.

An embodiment of this application further provides a computer-readable storage medium. The computer-readable storage medium may be any usable medium accessible by a computing device, or a data storage device, like a data center, including one or more usable media. The usable medium may be a magnetic medium (for example, a floppy disk, a hard disk, or a magnetic tape), an optical medium (for example, a DVD), a semiconductor medium (for example, a solid state drive), or the like. The computer-readable storage medium includes instructions, and the instructions indicate a computing device to perform the device-cloud collaborative data mining method.

An embodiment of this application further provides a computer program product including instructions. The computer program product may be software or a program product that includes the instructions and that can run on a computing device or can be stored in any usable medium. When the computer program product runs on at least one computing device, the at least one computing device is enabled to perform the device-cloud collaborative data mining method.

Finally, it should be noted that the foregoing embodiments are merely intended for describing the technical solutions of this application, but not for limiting this application. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A device-cloud collaborative data mining method, wherein the method comprises:
determining, by a cloud, a target text and a task configuration file based on a service requirement; encoding the target text by using a text encoder to obtain a text feature; and placing the text feature in the task configuration file and delivering the task configuration file to the vehicle; and
encoding, by the vehicle, image data by using a first picture encoder to obtain an image feature; calculating a value of a similarity between the text feature and the image feature; determining a target picture based on the value of the similarity and the task configuration file; and uploading the target picture to the cloud, wherein
the first picture encoder is obtained by compressing and tuning a second picture encoder, and the text encoder and the second picture encoder are two modules of a large image-text multimodal model.

2. The method according to claim 1, wherein the method further comprises a step of compressing the large image-text multimodal model:
performing, by the cloud, large model compression by extracting supervision information of the second picture encoder, to obtain the first picture encoder.

3. The method according to claim 2, wherein the large model compression comprises distillation, quantization, and/or operator tuning.

4. The method according to any one of claims 1 to 3, wherein the method further comprises a step of fine-tuning a parameter of the large image-text multimodal model:
inputting an annotated sample into the large image-text multimodal model for training, and obtaining a fine-tuning parameter when an image-text alignment loss between the second picture encoder and the text encoder converges, wherein the fine-tuning parameter comprises a visual fine-tuning parameter and/or a text fine-tuning parameter.

5. The method according to claim 4, comprising: updating, by the cloud, the text encoder based on the text fine-tuning parameter to generate a new text feature.

6. The method according to claim 4, wherein the task configuration file comprises the visual fine-tuning parameter, and the vehicle updates the first picture encoder based on the visual fine-tuning parameter.

7. The method according to any one of claims 1 to 5, wherein the task configuration file comprises an algorithm name, and the vehicle starts the corresponding first picture encoder based on the algorithm name.

8. The method according to any one of claims 1 to 7, wherein the task configuration file comprises a similarity threshold, and determining the target picture based on the value of the similarity and the task configuration file comprises:
when the value of the similarity between the text feature and the image feature is greater than the similarity threshold, determining the corresponding image data as the target picture.

9. The method according to any one of claims 1 to 8, wherein determining, by the cloud, the target text and the task configuration file based on the service requirement comprises:
updating, by the cloud, the task configuration file based on the service requirement, wherein the task configuration file comprises an updated similarity threshold.

10. A device-cloud collaborative data mining apparatus, wherein the apparatus comprises:
a requirement processing module, disposed on the cloud, and configured to: determine a target text and a task configuration file based on a service requirement, encode the target text by using the text encoder to obtain a text feature, and place the text feature in the task configuration file and deliver the task configuration file to the vehicle; and
an image-text processing module, disposed on the vehicle, and configured to: encode image data by using the first picture encoder to obtain an image feature, calculate a value of a similarity between the text feature and the image feature, determine a target picture based on the value of the similarity and the task configuration file, and upload the target picture to the cloud, wherein
the first picture encoder is obtained by compressing and tuning a second picture encoder, and the text encoder and the second picture encoder are two modules of a large image-text multimodal model.

11. The apparatus according to claim 10, further comprising:
a compression module, disposed on the cloud, wherein the compression module is configured to perform large model compression by extracting supervision information of the second picture encoder, to obtain the first picture encoder.

12. The apparatus according to claim 10 or 11, further comprising:
a parameter updating module, disposed on the cloud, and configured to: input an annotated sample into the large image-text multimodal model for prompt tuning (Prompt tuning) training, and obtain a fine-tuning parameter when an image-text alignment loss between the second picture encoder and the text encoder converges, wherein the fine-tuning parameter comprises a visual fine-tuning parameter and/or a text fine-tuning parameter.

13. The apparatus according to claim 10 or 11, further comprising:
a model updating module, wherein the cloud updates the text encoder based on the text fine-tuning parameter to generate a new text feature, and the vehicle updates the first picture encoder based on the visual fine-tuning parameter to generate a new picture feature.

14. A device-cloud collaborative data mining system, wherein the system comprises:
a requirement processing apparatus, disposed on the cloud, wherein the requirement processing apparatus is configured to: determine a target text and a task configuration file based on a service requirement, encode the target text by using the text encoder to obtain a text feature, and place the text feature in the task configuration file and deliver the task configuration file to the vehicle; and
an image-text processing apparatus, disposed on the vehicle, wherein the image-text processing apparatus is configured to: encode image data by using the first picture encoder to obtain an image feature, calculate a value of a similarity between the text feature and the image feature, determine a target picture based on the value of the similarity and the task configuration file, and upload the target picture to the cloud, wherein
the first picture encoder is obtained by compressing and tuning a second picture encoder, and the text encoder and the second picture encoder are two modules of a large image-text multimodal model.

15. A computing device cluster, comprising at least one computing device, wherein each computing device comprises a processor and a memory; and
a processor of the at least one computing device is configured to execute instructions stored in a memory of the at least one computing device, to enable the computing device cluster to perform the method according to any one of claims 1 to 9.

16. A computer storage medium, wherein the computer storage medium stores instructions, and when the instructions are run on a computer, the computer is enabled to perform the method according to any one of claims 1 to 9.
